# EUROPEAN PATENT SPECIFICATION

(11) **EP 4 478 519 B1**
(45) Date of publication and mention of the grant of the patent: **28.10.2026**
(21) Application number: 23799597.2
(22) Date of filing: 18.04.2023
(51) Int. Cl.: H01M 50/507, H01M 50/591, H01M 50/588, H01M 50/251, H01M 50/271, H01M 50/204, H01M 50/296, H01M 50/298, H01M 50/502

(54) **BATTERY SYSTEM AND ENERGY STORAGE SYSTEM INCLUDING SAME**
BATTERIESYSTEM UND ENERGIESPEICHERSYSTEM DAMIT
SYSTÈME DE BATTERIE ET SYSTÈME DE STOCKAGE D'ÉNERGIE LE COMPRENANT

(30) Priority: 04.05.2022 KR 20220055751; 27.06.2022 KR 20220078336
(43) Date of publication of application: 18.12.2024
(60) Divisional application: 26205550.2
(73) Proprietor: LG Energy Solution, Ltd., Seoul 07335 (KR)
(72) Inventor: KIM, Yo-Hwan, Daejeon 34122 (KR); KIM, Ji-Hun, Daejeon 34122 (KR); PARK, Hong-Jae, Daejeon 34122 (KR); YANG, Mun-Seok, Daejeon 34122 (KR); YOON, Sung-Han, Daejeon 34122 (KR); LEE, Seung-Jun, Daejeon 34122 (KR); LEE, Ji-Won, Daejeon 34122 (KR); LEE, Hyun-Min, Daejeon 34122 (KR); LEE, Hyung-Uk, Daejeon 34122 (KR); CHO, Tae-Shin, Daejeon 34122 (KR)
(74) Representative: Plasseraud IP
(86) International application number: PCT/KR2023/005252
(87) International publication number: WO 2023/214714

(56) References cited:
- EP-A1- 4 358 237
- CN-U- 209 804 827
- GB-A- 853 432
- KR-A- 20180 125 089
- KR-A- 20190 095 045
- KR-A- 20210 027 857
- KR-A- 20210 027 857
- KR-B1- 101 084 213
- US-A- 3 956 576

## Description

### TECHNICAL FIELD

The present application claims priority to Korean Patent Application No. 10-2022-0055751 filed on May 4, 2022 and Korean Patent Application No. 10-2022-0078336 filed on June 27, 2022.

The present disclosure relates to a battery, and more specifically, to a configuration of connections between battery containers in a battery system including a plurality of battery containers, and the like.

### BACKGROUND ART

Recently, as issues such as power shortage or eco-friendly energy have emerged, an energy storage system (ESS) for storing generated power has attracted a lot of attention. Typically, by using such an ESS, it is easy to construct a power management system such as a smart grid system, and thus the supply and demand of power in a specific region or city may be easily controlled. In addition, as commercialization of electric vehicles begins in earnest, such an ESS may be applied to electric charging stations capable of charging electric vehicles.

The ESS may be configured in various forms, but typically may be configured in a form including one or more battery containers. In this case, the battery container may include a plurality of battery modules connected to each other in series and/or in parallel. Here, a plurality of battery modules may be accommodated in the battery container through a rack frame or a separate fixing structure.

Moreover, in order to handle a very large amount of power, the ESS is often configured in a form including a plurality of battery containers. In this case, a plurality of battery containers may constitute a battery system in a form electrically connected to each other through a bus bar. At this time, since battery cells or battery modules exist inside the battery container, they may be easily protected from the external environments, such as water, wind, insects, and the like. However, since configurations connecting between battery containers, particularly bus bars, exist outside the battery containers, they may be exposed to such external environments, and thus there may a problem of being easily affected by the same.

In addition, according to the prior art, there is a problem in that it is not easy to electrically connect the battery containers. Moreover, in the case of a battery system or an energy storage system including a plurality of battery containers, several battery containers may be disposed in a narrow space to increase energy density. Therefore, there may be a problem in that the construction quality of the battery system or the energy storage system varies depending on the level of skill or the degree of effort of the operator.

In addition, the battery container usually weighs a lot and is very large in size compared to a general battery pack. Therefore, once the battery container is placed in a specific location, it is difficult to change its location. Thus, a tolerance above a certain level may be likely to occur in a space for electrical connection between battery containers.

### DISCLOSURE

### Technical Problem

The present disclosure is designed to solve the problems of the related art, and therefore the present disclosure is directed to providing a battery system having excellent installation workability or tolerance response capability together with effective protection of the electrical connection configuration between battery containers, an energy storage system including the same, and a protective cover used therefor.

However, technical problems to be solved by the present disclosure are not limited to the above-described problems, and other problems not mentioned herein may be clearly understood by those skilled in the art from the following description of the present disclosure.

### Technical Solution

The disclosure is defined in the appended set of claims.

### Advantageous Effects

According to one aspect of the present disclosure, a portion that is electrically connected between battery containers may be effectively protected from external environmental factors such as water, wind, dust, insects, and the like.

In addition, according to one aspect of the present disclosure, workability for the electrical connection configuration between battery containers may be improved.

Also, according to one aspect of the present disclosure, even if a tolerance exists in the connection portion between battery containers, it may be possible to adaptively respond to such a tolerance.

In addition, several other additional effects may be achieved by various embodiments of the present disclosure. These various effects of the present disclosure will be described in detail in each embodiment, or descriptions of effects that may be easily understood by those skilled in the art will be omitted. KR 2021 0027857 A discloses some of the features of independent claim 1.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a front view schematically showing the configuration of a battery system according to an embodiment of the present disclosure.
FIG. 2 is a top view schematically showing the configuration of a battery system according to an embodiment of the present disclosure.
FIG. 3 is a partially enlarged view schematically showing a partial configuration of a battery system according to an example useful for understanding of the present disclosure.
FIG. 4 is a partially enlarged view of a state in which a partial configuration of a battery system according to an example useful for understanding of the present disclosure.
FIG. 5 is an exploded perspective view schematically showing a partial configuration of a battery system according to an example useful for understanding of the present disclosure.
FIG. 6 is an exploded perspective view schematically showing the configuration of a protective cover according to an example useful for understanding of the present disclosure.
FIG. 7 is a perspective view showing the configuration of a guide cover included in a protective cover according to an example useful for understanding of the present disclosure.
FIGS. 8 and 9 are views showing some processes of a configuration in which a protective cover is mounted in a battery system according to an example useful for understanding of the present disclosure.
FIG. 10 is an exploded perspective view schematically showing the configuration of a bottom cover included in a protective cover according to an example useful for understanding of the present disclosure.
FIG. 11 is a perspective view schematically showing the configuration of a top cover included in a protective cover according to an example useful for understanding of the present disclosure.
FIG. 12 is a perspective view schematically showing a partial configuration of a battery system according to an embodiment of the present disclosure.
FIG. 13 is an exploded perspective view schematically showing a partial configuration of a battery system according to another embodiment of the present disclosure.
FIG. 14 is a combined perspective view of the configuration of FIG. 13.
FIG. 15 is a view schematically showing a partial configuration of a battery system according to still another embodiment of the present disclosure.
FIG. 16 is an exploded perspective view schematically showing the configuration of a protective cover included in a battery system according to still another example useful for understanding of the present disclosure.
FIG. 17 is an exploded perspective view schematically showing the configuration of a protective cover included in a battery system according to still another example useful for understanding of the present disclosure.
FIG. 18 is a top view schematically showing the configuration of a battery system according to an embodiment of the present disclosure.
FIG. 19 is a partially enlarged view schematically showing a partial configuration of a battery system according to an embodiment of the present disclosure.
FIG. 20 is a perspective view schematically showing the configuration of a protective cover according to an embodiment of the present disclosure.
FIGS. 21 to 23 are views showing various shape changes of a protective cover according to an embodiment of the present disclosure.
FIG. 24 is a cross-sectional view schematically showing the configuration of a protective cover according to an embodiment of the present disclosure.
FIG. 25 is a perspective view schematically showing the configuration of a protective cover according to another embodiment of the present disclosure.
FIG. 26 is a view schematically showing a partial configuration of a battery system according to still another embodiment of the present disclosure.
FIG. 27 is a view schematically showing a partial configuration of a battery system according to still another embodiment of the present disclosure.
FIG. 28 is an exploded perspective view schematically showing a partial configuration of a battery system according to still another embodiment of the present disclosure.
FIG. 29 is an exploded perspective view schematically showing a partial configuration of a battery system according to still another embodiment of the present disclosure.
FIG. 30 is an exploded perspective view schematically showing a partial configuration of a battery system according to still another embodiment of the present disclosure.
FIG. 31 is a view schematically showing the configuration of a link bus bar according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that modifications could be made.

In the case of various embodiments included in this specification, detailed descriptions of portions to which descriptions of other embodiments may be applied identically or similarly will be omitted, and portions with differences will be mainly described.

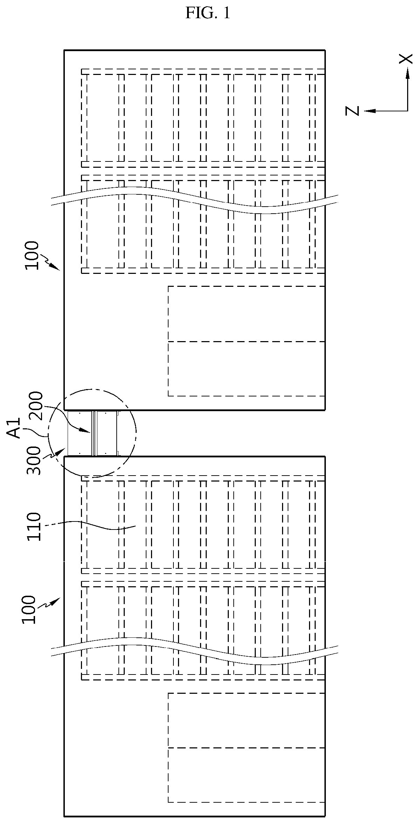

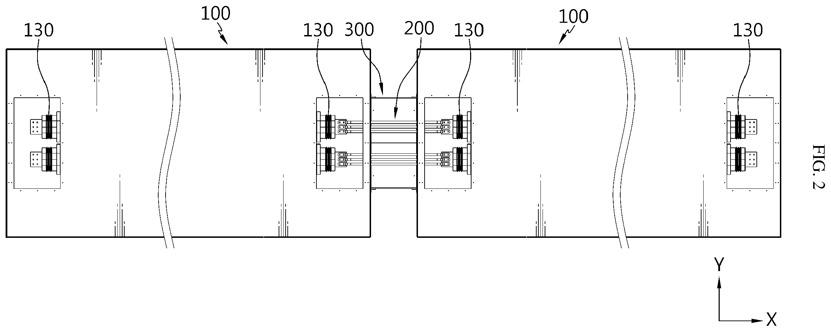

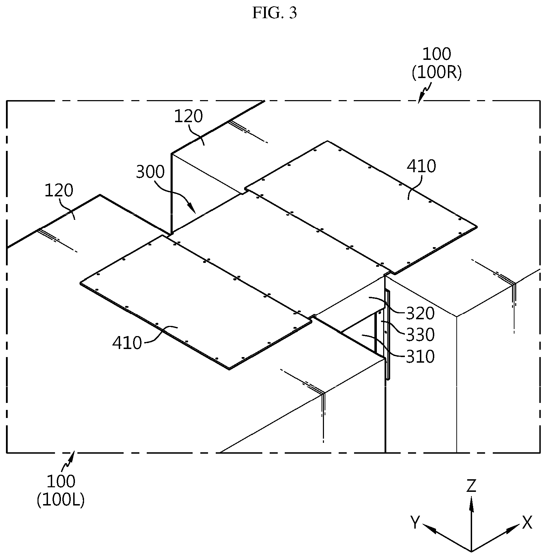

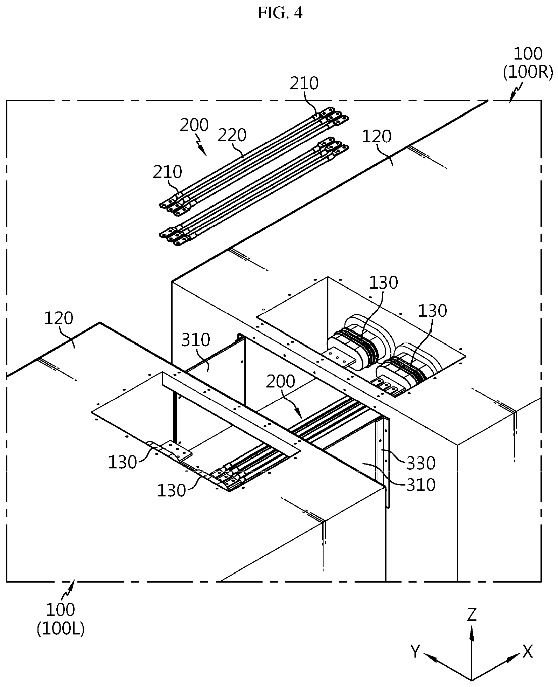

FIG. 1 is a front view schematically showing the configuration of a battery system according to an embodiment of the present disclosure, and FIG. 2 is a top view schematically showing the configuration of a battery system according to an embodiment of the present disclosure. FIG. 3 is a partially enlarged view schematically showing a partial configuration of a battery system according to an example useful for understanding of the present disclosure, and FIG. 4 is a partially enlarged view of a state in which a partial configuration of a battery system according to an example useful for understanding of the present disclosure. In particular, FIGS. 3 and 4 may be referred to as enlarged configurations of portion A1 of FIG. 1. Also, in FIGS. 1 and 2, drawings are illustrated in a partially removed, cut, or transparent form for convenience of description.

Referring to FIGS. 1 to 4, the battery system according to the present disclosure includes a battery container 100, a link bus bar 200, and a protective cover 300.

The battery container 100 includes a battery module 110, a container housing 120, and a container terminal 130.

Here, the battery module 110 may be configured such that a plurality of battery cells (secondary batteries) are accommodated in a module case to store and discharge power, and may be provided with one or more. In particular, as indicated by dotted lines in FIG. 1, a plurality of battery modules 110 may be provided inside the battery container 100, and in this case, the plurality of battery modules 110 may be electrically connected in series and/or in parallel. Also, in order to facilitate arrangement or stacking of the plurality of battery modules 110, a rack frame may be included in the battery container 100. The rack frame may allow a plurality of battery modules 110 to be stacked and accommodated in the horizontal and/or vertical direction. The battery container 100 according to the present disclosure may employ various battery modules 110 known at the time of filing of the present disclosure. Also, the detailed configuration of the battery module 110 is widely known at the time of filing of the present disclosure, and thus a detailed description thereof will be omitted.

The container housing 120 may be configured to accommodate the battery module 110 in an inner space. In particular, the container housing 120 has an empty space inside and is formed in a substantially rectangular parallelepiped shape, so that a plurality of battery modules 110 may be accommodated in the inner space. Moreover, a rack frame or a partition wall structure capable of accommodating a plurality of battery modules 110 may be further accommodated or provided inside the container housing 120. The container housing 120 may be made of a metal material such as steel, but the present disclosure is not limited to a specific material of the container housing 120.

As shown in FIG. 4, the container terminal 130 may be located on at least one side of the container housing 120 and configured to be electrically connected to the outside. For example, the container terminal 130 may be configured to be connected to another battery container 100. In particular, the container terminal 130 may be configured to allow a main DC power, which is a charging and discharging power for the battery container 100, to flow. In this case, the container terminal 130 may be referred to as a main DC power terminal. Also, the container terminal 130 may include two types of terminals, that is, a container positive electrode terminal and a container negative electrode terminal, as shown in FIG. 4, so that a charge/discharge power may flow.

The container terminal 130 may be installed on a plurality of side surfaces of the container housing 120. For example, as shown in FIG. 2, the container terminals 130 may be installed on the left and right sides of one container housing 120, respectively. In this case, a main power line may be connected between the container terminals 130 installed on the left and right sides within one battery container 100. Such a main power line may provide a path through which not only the power of the corresponding battery container 100 but also the power of other battery containers 100 is transmitted. In particular, the plurality of battery containers 100 may be electrically connected to each other in parallel, and in this case, the main power line of each battery container 100 may allow the power of other battery containers 100 to be transmitted.

The battery container 100 may be included in the battery system in plurality. For example, as shown in FIGS. 1 to 4 and the like, the battery system may include at least two battery containers 100.

The link bus bar 200 may have a plurality of ends, so that different ends may be connected to container terminals 130 of different battery containers 100, respectively. To this end, the link bus bar 200 may be configured to extend long in at least one direction. For example, the link bus bar 200 may be configured to extend long in the left and right directions, wherein both ends may be connected to container terminals 130 of different battery containers 100. More specifically, in the battery system including a left container 100L and a right container 100R, the link bus bar 200 may have a left end connected to the container terminal 130 of the left container 100L and a right end connected to the container terminal 130 of the right container 100R.

The link bus bar 200 may be connected to the container terminals 130 of the different battery containers 100 as described above, thereby electrically connecting a plurality of battery containers 100 to each other. For example, in the embodiments shown in FIGS. 1 to 4, the link bus bar 200 may electrically connect between the two battery containers 100, that is, between the left container 100L and the right container 100R. In particular, the link bus bar 200 may allow the DC power, that is, the charge/discharge power of the battery system to flow between the different battery containers 100.

The protective cover 300 may be configured to be coupled to the container housing 120 of the battery container 100. In particular, the protective cover 300 may be coupled to the container housing 120 of the plurality of battery containers 100 electrically connected by the link bus bar 200. For example, as shown in FIGS. 3 and 4, when two battery containers 100, that is, the left container 100L and the right container 100R are connected by the link bus bar 200, the protective cover 300 may be coupled to the container housing 120 of the left container 100L and the container housing 120 of the right container 100R.

In addition, the protective cover 300 may be configured to surround the link bus bar 200 in a space between the plurality of battery containers 100 connected by the link bus bar 200 as described above. For example, in the example shown in FIGS. 3 and 4, the protective cover 300 may be positioned in an empty space between the left container 100L and the right container 100R. Also, the protective cover 300 may surround the link bus bar 200 in a space between the left container 100L and the right container 100R. In particular, the protective cover 300 may be configured to cover the top, bottom, front, and rear of the link bus bar 200 in the space between the two battery containers 100.

According to this example useful for understanding of the present disclosure, exposure of the link bus bar 200 to the outside in the space between the two battery containers 100 may be prevented. Therefore, the electrical connection configuration between the battery containers 100 may be protected more stably. In particular, in the case of a system such as an ESS, it is often placed outdoors, and according to the above example useful for understanding of the present disclosure, the electrical connection configuration of the battery container 100 may be safely protected from various external factors. For example, the link bus bar 200 of the present disclosure may be safely protected from various external climatic and animal factors such as water, wind, heat, dust, insects, birds, and the like.

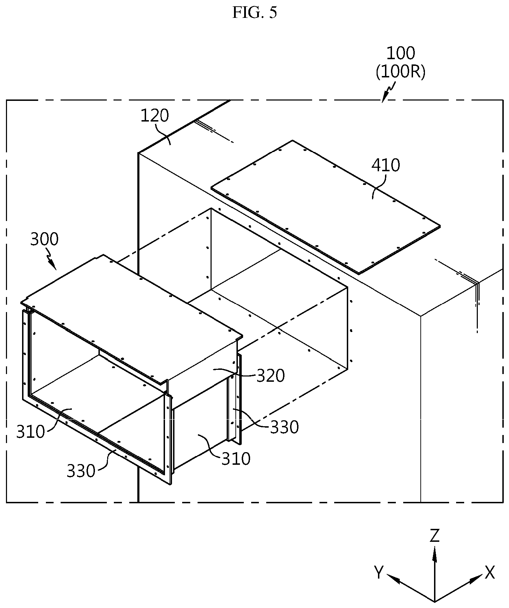

The protective cover 300 may be configured to be detachable from the outer surface of the container housing 120. This will be described in more detail with reference to FIG. 5.

FIG. 5 is an exploded perspective view schematically showing a partial configuration of a battery system according to an example useful for understanding of the present disclosure. In FIG. 5, only one battery container 100 is illustrated for convenience of description.

Referring to FIG. 5, in the battery system according to an example useful for understanding of the present disclosure, the protective cover 300 may be configured to be mounted on and detached from the left surface of the container housing 120. More specifically, in the protective cover 300, the right side portion thereof may be coupled to the left surface of the container housing 120 of the right container 100R. In this case, the protective cover 300 and the container housing 120 may be fastened and fixed by a bolting method. In addition, the protective cover 300 coupled to the container housing 120 in this way may be separated from the container housing 120 by releasing the bolting fastening. Also, although not shown in FIG. 5, the left side portion of the protective cover 300 may be coupled to the right surface of the other container, that is, the left container 100L.

According to this example useful for understanding of the present disclosure, a battery system may be constructed more easily. In particular, according to the above example, the battery container 100 is moved to a predetermined position, and then the protective cover 300 may be mounted. Therefore, since the battery container 100 is moved while the protective cover 300 is not mounted, it is possible to prevent the protective cover 300 from being damaged or the movement of the battery container 100 from being hindered when the battery container 100 is moved. Also, the protective cover 300 is mounted in a state where the battery container 100 is completely placed in the correct position, so that tolerances generated depending on the placed position of the battery container 100 may be appropriately dealt with. In addition, according to the above example, the protective cover 300 may be mounted after the link bus bar 200 is connected, and thus fastening of the link bus bar 200 or configuration of the link system may be performed more easily.

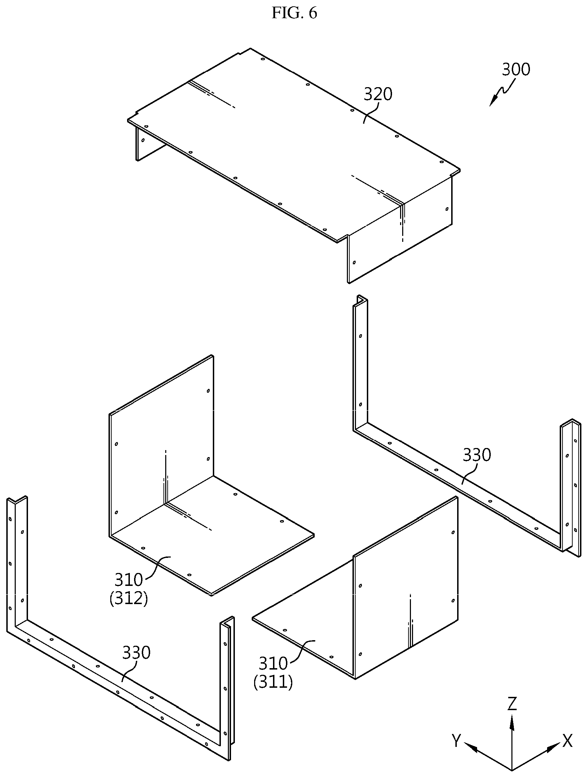

FIG. 6 is an exploded perspective view schematically showing the configuration of a protective cover according to an example useful for understanding of the present disclosure.

Referring to FIG. 6, the protective cover 300 may include a plurality of unit covers. In this case, the plurality of unit covers may be configured to be separated from and coupled to each other. In particular, the protective cover 300 is manufactured in a state where each unit cover is separated from each other, and then each unit cover may be coupled to each other in the process of being mounted on the container housing 120. At this time, coupling of the plurality of unit covers may be performed in a manner such as bolting. To this end, at least some of the plurality of unit covers may be formed with fastening holes or the like for mutual bolting fastening. In addition, the plurality of unit covers may have a configuration such as a protrusion or a groove for mutual insertion fastening or the like.

According to this example useful for understanding of the present disclosure, since the protective cover 300 is separated into several unit covers, handling and mounting of the protective cover 300 may be made more easily. In addition, according to the above example, overall protection may be better provided for the link bus bar 200.

Moreover, the protective cover 300 according to the present disclosure, as a plurality of unit covers, may include a bottom cover 310 and a top cover 320 as shown in FIG. 6.

Here, the bottom cover 310 may be configured to protect the lower and side portions of the link bus bar 200. To this end, the bottom cover 310 may have several plate-shaped parts to provide improved coupling while facilitating the formation of a space for accommodating the link bus bar 200 therein. More specifically, the bottom cover 310 may include a lower plate for covering the lower portion of the link bus bar 200 and a side plate for covering the side portion of the link bus bar 200.

Also, the top cover 320 may be configured to protect the upper portion of the link bus bar 200. To this end, the top cover 320 may include a plate-shaped part, that is, an upper plate, to cover the upper portion of the link bus bar 200.

According to this example useful for understanding of the present disclosure, the exposed portions of the link bus bar 200 between the two battery containers 100 may be easily covered. In particular, the link bus bar 200 connected between the two battery containers 100 disposed in the left and right directions may be exposed at the top, bottom, front, and rear in the space between the two battery containers 100. However, in the case of the above example, the exposed portions of the link bus bar 200, that is, the top, bottom, front, and rear, may be covered and protected by the bottom cover 310 and the top cover 320. In addition, according to the above example, the bottom cover 310 and the top cover 320 may be fastened in a state where the link bus bar 200 is connected between the two battery containers 100, so that the link bus bar 200 and the protective cover 300 may be easily assembled.

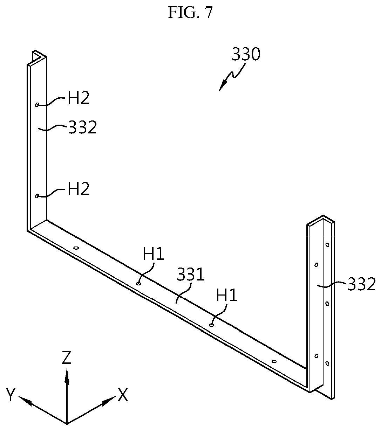

In addition, the plurality of unit covers constituting the protective cover 300 may further include a guide cover 330 as shown in FIG. 6. The configuration of the guide cover 330 will be described in more detail with reference to FIGS. 7 to 9.

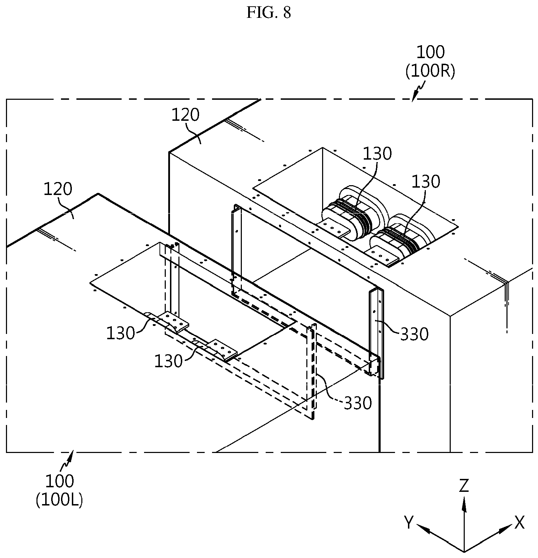

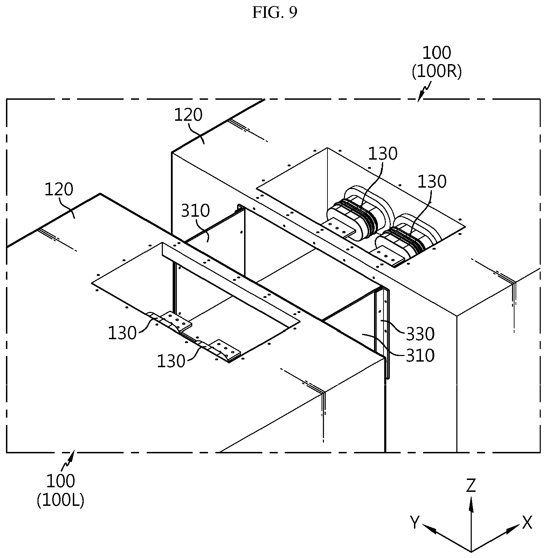

FIG. 7 is a perspective view showing the configuration of a guide cover included in a protective cover according to an example useful for understanding of the present disclosure. FIGS. 8 and 9 are views showing some processes of a configuration in which a protective cover is mounted in a battery system according to an example useful for understanding of the present disclosure.

First, referring to FIGS. 7 and 8, the guide cover 330 may be coupled to the outer side of the container housing 120. Here, the guide cover 330 may be coupled to the container housing 120 by bolting. In this case, coupling holes for bolting and fastening to each other may be formed in the guide cover 330 and the container housing 120, respectively.

In addition, as shown in FIG. 7, the guide cover 330 is formed in a C shape and may be coupled to the lower portion and the side portions (front and rear portions) of the part where the container terminal 130 is located in the container housing 120. More specifically, the guide cover 330 may include a horizontal guide portion 331 and a vertical guide portion 332. Here, the horizontal guide portion 331 may be positioned on the lower side of the container terminal 130 in the container housing 120, and the vertical guide portion 332 may be positioned on the front and rear sides of the container terminal 130.

Since the protective cover 300 located between the two battery containers 100 may be mounted on each of the two battery containers 100, two guide covers 330 may be included. For example, referring to the configuration shown in FIG. 8, two guide covers 330 may be included as unit covers for configuring one protective cover 300. In this case, one guide cover 330 may be mounted on the right surface of the left container 100L, and the other guide cover 330 may be mounted on the left surface of the right container 100R.

The guide cover 330 may be configured such that at least one of the bottom cover 310 and the top cover 320 is seated. That is, the guide cover 330 may be configured such that the bottom cover 310 or the top cover 320 is seated while coupled to the outer side of the container housing 120. Referring to the configuration shown in FIG. 9 as a more specific example, the bottom cover 310 may be seated on the two guide covers 330 coupled to the left container 100L and the right container 100R. In particular, the left portion of the bottom cover 310 may be seated on the left guide cover 330, and the right portion of the bottom cover 310 may be seated on the right guide cover 330.

In this case, there may be a portion where the bottom cover 310 may be seated in the guide cover 330. For example, referring to the example of FIG. 7, the horizontal guide portion 331 and the vertical guide portion 332 of the guide cover 330 may have flat portions in the horizontal and vertical directions, respectively. Also, at least a portion of the bottom cover 310 may be seated on the flat portions of the horizontal guide portion 331 and the vertical guide portion 332. In particular, the bottom cover 310 is seated on the guide cover 330, so that the lower and side portions may be supported in upper, front, and rear directions.

Here, the guide cover 330 may be fastened to the bottom cover 310 by bolting. To this end, fastening holes for bolting and fastening with the bottom cover 310 may be formed in the guide cover 330. For example, as shown in the example of FIG. 7, fastening holes may be formed in the horizontal guide portion 331 of the guide cover 330, as indicated by H1. In addition, fastening holes may be formed in the vertical guide portion 332 of the guide cover 330, as indicated by H2. Also, these fastening holes H1, H2 may be used for bolting and fastening with the bottom cover 310.

According to this example useful for understanding of the present disclosure, the battery system may be assembled more easily. In particular, in the case of the above example, the installation work of mounting the protective cover 300 on the outer side of the battery container 100 may be easily performed. Moreover, in the above example, the coupling process of the guide cover 330 to the container housing 120 may proceed at any point in time, such as before or after the movement of the battery container 100 and before or after the assembly connection of the link bus bar 200. In particular, the guide cover 330 may be pre-mounted on the outer surface of the container housing 120 before the two battery containers 100 are installed adjacent to each other. In addition, since the bottom cover 310 may have a larger area than the guide cover 330, handling and installation operations may not be easy, but according to the above example, the bottom cover 310 only needs to be seated or coupled to the guide cover 330, resulting in no need to be directly coupled to the container housing 120. Therefore, the structure of the bottom cover 310 may be simplified without being complicated.

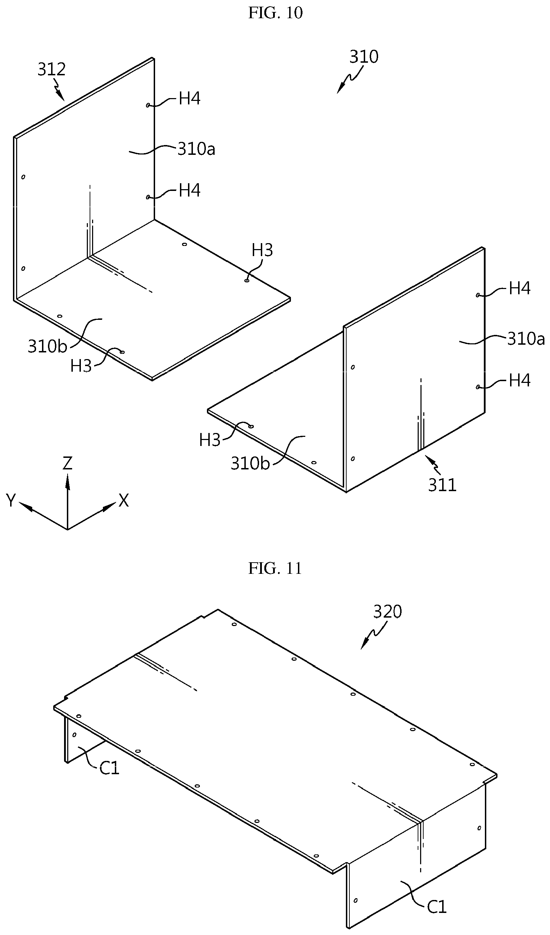

The bottom cover 310 may include two unit bottom covers 310. This will be described in more detail with further reference to FIG. 10.

FIG. 10 is an exploded perspective view schematically showing the configuration of a bottom cover included in a protective cover according to an example useful for understanding of the present disclosure.

Referring to FIG. 10, the bottom cover 310 may include a first bottom cover 311 and a second bottom cover 312. Here, the first bottom cover 311 may be configured to protect the front side (-Y-axis direction in the drawing) and the lower side of the link bus bar 200. Also, the second bottom cover 312 may be configured to protect the rear side (+Y-axis direction in the drawing) and the lower side of the link bus bar 200.

More specifically, as shown in FIG. 10, the first bottom cover 311 and the second bottom cover 312 may be configured in the form of a bent plate. That is, the first bottom cover 311 and the second bottom cover 312 may include a side portion 310a and a base portion 310b around the bent portion. Here, the side portion 310a of the first bottom cover 311 may be positioned in front of the link bus bar 200 to cover the front of the link bus bar 200. Also, the side portion 310a of the second bottom cover 312 may be positioned at the rear of the link bus bar 200 to cover the rear of the link bus bar 200. In addition, the base portion 310b of the first bottom cover 311 and the base portion 310b of the second bottom cover 312 may be configured such that at least a portion thereof overlaps. In this case, airtightness is improved, which may more effectively prevent foreign matter or the like from entering into the space between the base portions 310b of the two bottom covers 310. In this way, the first bottom cover 311 and the second bottom cover 312 may have a similar shape in a bent form, but may be configured to be symmetrical to each other in the front-rear direction.

According to this example useful for understanding of the present disclosure, the bottom cover 310 may be assembled more easily. In particular, according to the above example, the process of seating the bottom cover 310 on the guide cover 330 may be facilitated even when the link bus bar 200 is assembled to the container terminal 130. Also, according to the above example, it is possible to more appropriately cope with tolerances that may occur in the installation process of the battery system. In particular, according to the above example, it is possible to more effectively cope with a length change in the front-rear direction (Y-axis direction) of the battery system.

Meanwhile, the bottom cover 310 may have a configuration for fastening with the guide cover 330, such as a bolting fastening hole. For example, the first bottom cover 311 and the second bottom cover 312 may have fastening holes formed in the base portion 310b and the side portion 310a, as indicated by H3 and H4 in FIG. 10. The fastening holes H3, H4 of the bottom cover 310 may be configured to communicate with the fastening holes H1, H2 of the guide cover 330 shown in the example of FIG. 7 while the bottom cover 310 is seated on the guide cover 330. Then, as the bolts pass through the fastening holes H3, H4 of the bottom cover 310 and the fastening holes H1, H2 of the guide cover 330 in common, the bottom cover 310 and the guide cover 330 may be fastened and fixed.

FIG. 11 is a perspective view schematically showing the configuration of a top cover included in a protective cover according to an example useful for understanding of the present disclosure.

Referring to FIG. 11, the top cover 320 may be configured to form an inner space together with the bottom cover 310 to cover an upper portion of the link bus bar 200 located in the inner space. The top cover 320 may be formed in a substantially plate-like shape. Moreover, the top cover 320 may have a bent portion, as indicated by C1 in FIG. 11. Also, as shown in FIG. 3, etc., such a bent portion C1 may be configured to cover the upper end of the side portion 310a of the bottom cover 310. In particular, the top cover 320 may have bent portions formed at both ends to cover the top outer surfaces of the side portions 310a of the first bottom cover 311 and the second bottom cover 312.

According to this example useful for understanding of the present disclosure, the sealing force between the top cover 320 and the bottom cover 310 may be enhanced. Therefore, the protection performance of the link bus bar 200 by the top cover 320 and the bottom cover 310 may be further improved.

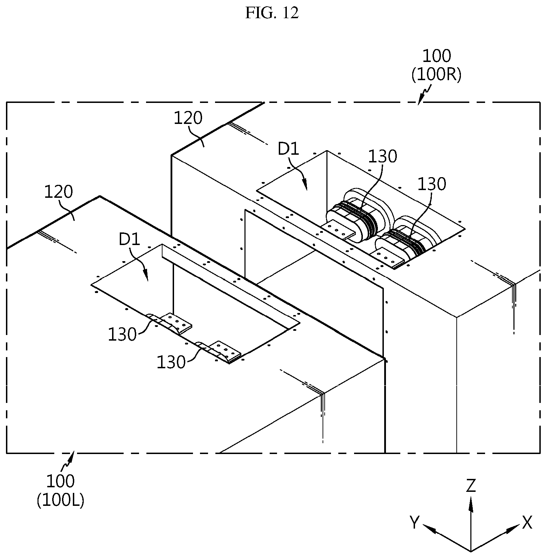

FIG. 12 is a perspective view schematically showing a partial configuration of a battery system according to an embodiment of the present disclosure. More specifically, in FIG. 12, only the battery container 100 is illustrated.

Referring to FIG. 12, in the battery system according to the present disclosure, the container housing 120 of the battery container 100 may have a terminal accommodating portion formed therein, as indicated by D1. The terminal accommodating portion D1 may be formed in a concave shape in an inward direction on at least one side of the container housing 120. Also, the container terminal 130 may be located in the terminal accommodating portion D1 of the container housing 120. That is, the container terminal 130 may be provided in a form exposed to the outer side of the container housing 120, particularly on the outer side of a concave portion of the container housing 120.

According to this embodiment of the present disclosure, the protective structure of the container terminal 130 and the link bus bar 200 connected to the container terminal 130 may be achieved more easily. That is, since the container terminal 130 is located in the concave portion called the terminal accommodating portion D1 in the container housing 120, the container terminal 130 may be easily protected by covering only the opening of the concave portion.

In particular, the terminal accommodating portion D1 may be located at an upper edge portion of the container housing 120. For example, in the embodiment of FIG. 12, the terminal accommodating portion D1 of the left container 100L may be located at an upper right edge portion of the container housing 120. In addition, in the embodiment of FIG. 12, the terminal accommodating portion D1 of the right container 100R may be located at an upper left edge portion of the container housing 120.

In particular, the terminal accommodating portion D1 may be formed such that the container terminal 130 is exposed in the upper and side directions. Here, the side direction may be a direction of an adjacent battery container 100. For example, in the embodiment of FIG. 12, the terminal accommodating portion D1 of the left container 100L may be configured to be opened in the upper and right directions. Therefore, the container terminal 130 of the left container 100L may be exposed in the upper and right directions. Also, the terminal accommodating portion D1 of the right container 100R may be configured to be opened in the upper and left directions. Therefore, the container terminal 130 of the right container 100R may be exposed in the upper and left directions.

According to this embodiment of the present disclosure, the battery system may be constructed more easily. For example, as shown in FIG. 12, in a state where two battery containers 100 are disposed adjacent to each other in the left-right direction, each container terminal 130 may be exposed in the upper and side directions of the adjacently disposed portion. Therefore, an operator may more easily connect or disconnect the link bus bar 200 or the protective cover 300 with respect to the container terminal 130 exposed in this way. In particular, according to the above embodiment, installation or replacement of the link bus bar 200 may be performed more smoothly.

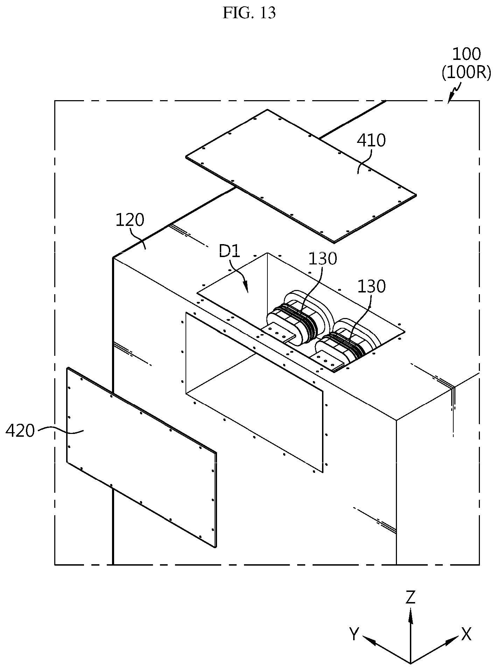

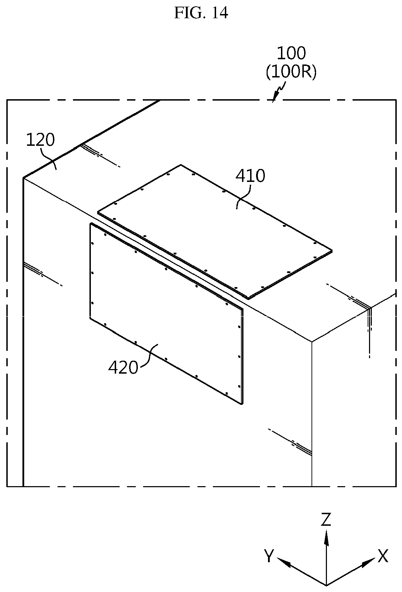

FIG. 13 is an exploded perspective view schematically showing a partial configuration of a battery system according to another embodiment of the present disclosure. FIG. 14 is a combined perspective view of the configuration of FIG. 13.

Referring to FIGS. 13 and 14, the battery system according to the present disclosure may further include an upper terminal cover 410 and/or a side terminal cover 420. The upper terminal cover 410 may be configured to close an upper portion of the terminal accommodating portion D1. That is, the upper terminal cover 410 may be configured to cover an upper portion of the opening of the terminal accommodating portion D1. Also, the side terminal cover 420 may be configured to close a side portion of the terminal accommodating portion D1. For example, in the embodiments of FIGS. 13 and 14, the side terminal cover 420 may be configured to cover the left side of the opening with respect to the terminal accommodating portion D1.

According to this embodiment of the present disclosure, the terminal accommodating portion and/or the link bus bar 200 may be protected in various situations, such as before or after the construction of the battery system and before or after the connection of the battery container 100 to the link bus bar 200. In particular, as shown in FIGS. 3 and 5, the upper terminal cover 410 may seal the upper end of the opening of the terminal accommodating portion D1 after the battery system is built, even in a state where the protective cover 300 is coupled to the battery container 100. However, the upper terminal cover 410 may be temporarily separated in the step of constructing the battery system. In particular, during the process of connecting the link bus bar 200 to the container terminal 130, the upper terminal cover 410 may be removed. And, after the process of connecting the link bus bar 200 is completed, the upper terminal cover 410 may be coupled to close the upper end of the opening of the terminal accommodating portion D1.

Meanwhile, the side terminal cover 420 may not be coupled to the terminal accommodating portion D1 in a state where the battery system is constructed, but may be coupled to the terminal accommodating portion D1 in a state where the battery system is not constructed, for example, in a state where the battery container 100 is being transported separately. Alternatively, the side terminal cover 420 may be coupled to the terminal accommodating portion D1 provided in a portion not connected to another battery container 100 even in a state where the battery system is constructed. For example, both the upper terminal cover 410 and the side terminal cover 420 may be coupled to the terminal accommodating portion D1 provided at the upper right edge of the battery container 100 disposed on the rightmost side among the plurality of battery containers 100 arranged and connected in the left-right direction. On the other hand, since the terminal accommodating portion D1 provided at the upper left edge of the battery container 100 disposed on the rightmost side is connected to another battery container 100 located on the left side, only the upper terminal cover 410 may be coupled thereto and the side terminal cover 420 may not be coupled thereto. In particular, a portion of the container housing 120 on which the side terminal cover 420 is mounted may be a portion on which the protective cover 300 is mounted. Therefore, when the protective cover 300 is mounted, it may be said that the side terminal cover 420 is not mounted.

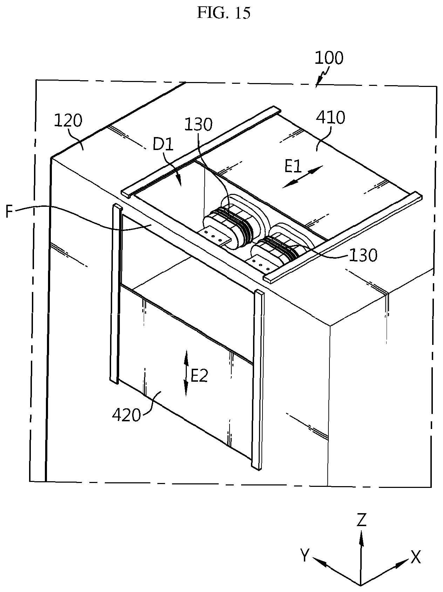

FIG. 15 is a view schematically showing a partial configuration of a battery system according to still another embodiment of the present disclosure.

Referring to FIG. 15, the battery system according to the present disclosure includes an upper terminal cover 410 and a side terminal cover 420 as in the embodiments of FIGS. 13 and 14, but the upper terminal cover 410 and/or the side terminal cover 420 may be configured to be slidable with respect to the container housing 120.

More specifically, the upper terminal cover 410 is mounted on the upper surface of the container housing 120, but may be configured to be slidable in the left-right direction (X-axis direction), as indicated by arrow E1 in FIG. 15. Also, the upper terminal cover 410 may be configured to open and close the upper end of the opening of the terminal accommodating portion D1 due to this sliding motion. For example, in the process of coupling the link bus bar 200 to the container terminal 130, the upper terminal cover 410 may slide in the +X-axis direction to open the upper portion of the terminal accommodating portion D1, thereby facilitating the operator's connection of the link bus bar 200. Also, when this connection work is completed, the upper terminal cover 410 may slide in the -X-axis direction to close the terminal accommodating portion D1.

In addition, the side terminal cover 420 is mounted on the side surface of the container housing 120, but may be configured to be slidable in the vertical direction (Z-axis direction), as indicated by arrow E2 in FIG. 15. Also, the side terminal cover 420 may be configured to open and close the side portion of the opening of the terminal accommodating portion D1 through this sliding motion. For example, in the process of transporting the battery container 100, the side terminal cover 420 may slide in the +Z-axis direction to close the side portion of the terminal accommodating portion D1. Also, after the transportation of the battery container 100 is completed, the side terminal cover 420 may slide in the -Z-axis direction to expose the side portion of the terminal accommodating portion D1, and a connection of the link bus bar 200 and a mounting operation of the protective cover 300 may be performed.

Meanwhile, as indicated by F in FIG. 15, the battery container 100 may further include a coupling reinforcing member. The coupling reinforcing member F may be located in the terminal accommodating portion D1 of the container housing 120. In particular, the coupling reinforcing member F may be formed to extend long along the edge of the container housing 120. Moreover, the coupling reinforcing member F may be located at the edge portion where the terminal accommodating portion D1 is formed, so that the opening of the terminal accommodating portion D1 may be divided into an upper direction and a side direction.

The coupling reinforcing member F may be configured such that various components included in the battery system of the present disclosure are fastened and fixed. For example, at least some components of the protective cover 300 shown in FIGS. 3 to 11, particularly the top cover 320 may be coupled and fixed to the coupling reinforcing member F. In addition, the upper terminal cover 410 and/or the side terminal cover 420 shown in the embodiments of FIGS. 13 to 15 may be coupled and fixed to the coupling reinforcing member F. Moreover, the coupling reinforcing member F may be formed with fastening holes for coupling and fixing with such other components.

In the battery system according to the present disclosure, a bolting fastening configuration may be applied between various components. In this case, the fastening hole or coupling hole for bolting fastening may be formed larger than the size of the bolt. For example, the bottom cover 310 may be mutually coupled and fixed to the guide cover 330 by passing bolts through the fastening holes, wherein the fastening holes of the bottom cover 310 may be configured to extend long in one direction, for example, in the front-rear direction (Y-axis direction) to change the through position of the bolts. As another example, the top cover 320 may be fastened to the coupling reinforcing member F by bolting, wherein the fastening hole of the top cover 320 may be formed long in one direction, for example, in the left-right direction (X-axis direction).

According to this embodiment of the present disclosure, even if the seating position of the battery container 100 is slightly different from the designed position when the battery system is constructed, bolting fastening may be performed at an appropriate position through the elongated fastening holes. Therefore, it is possible to respond more effectively to tolerances.

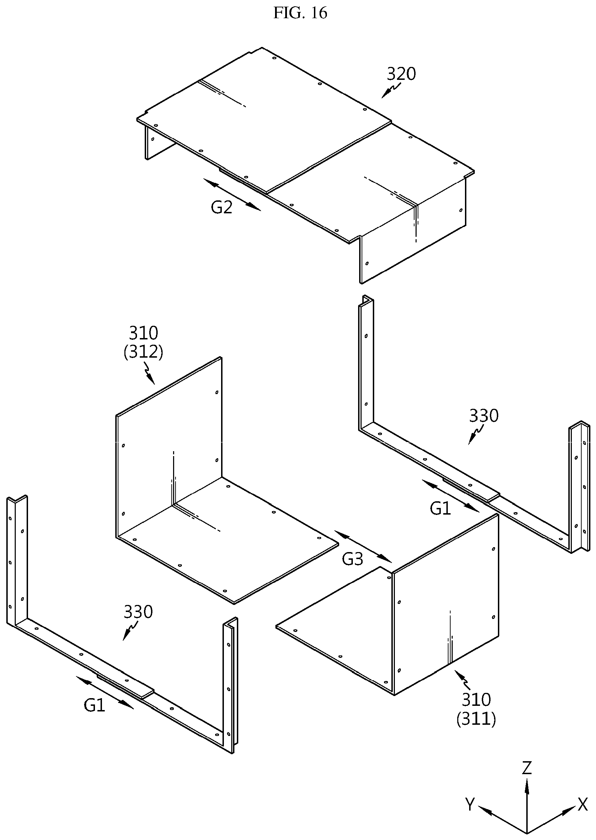

FIG. 16 is an exploded perspective view schematically showing the configuration of a protective cover included in a battery system according to still another example useful for understanding of the present disclosure.

Referring to FIG. 16, the protective cover 300 may be configured to vary in length in at least one direction. For example, the protective cover 300 may be configured to vary in length in the front-rear direction (Y-axis direction). To this end, various components included in the protective cover 300 may be configured to be able to change in length.

More specifically, the guide cover 330 may be configured to vary in length in the direction of arrow G1 in FIG. 16. In this case, the guide cover 330 includes two unit members, wherein the two unit members may be configured to be movable along the coupling rail. In addition, the top cover 320 may be configured to vary in length in the direction of arrow G2 in FIG. 16. In this case, the top cover 320 may be configured to be movable in a sliding manner in a state where the two plate-like members are coupled to each other. Also, the bottom cover 310 may be configured to allow a relative distance between the first bottom cover 311 and the second bottom cover 312 to be varied, as indicated in the direction of arrow G3.

According to this example useful for understanding of the present disclosure, it is possible to respond more effectively to tolerances when the battery system is constructed. In particular, during the process of arranging the two battery containers 100 in the left-right direction, the terminal accommodating portion D1 may not exactly face each other, but may be staggered to some extent in the front-rear direction (Y-axis direction), resulting in an error. At this time, according to the above example, the protective cover 300 may be stably mounted between the two battery containers 100 by adjusting the length of the protective cover 300 in the front-rear direction in response to such an error.

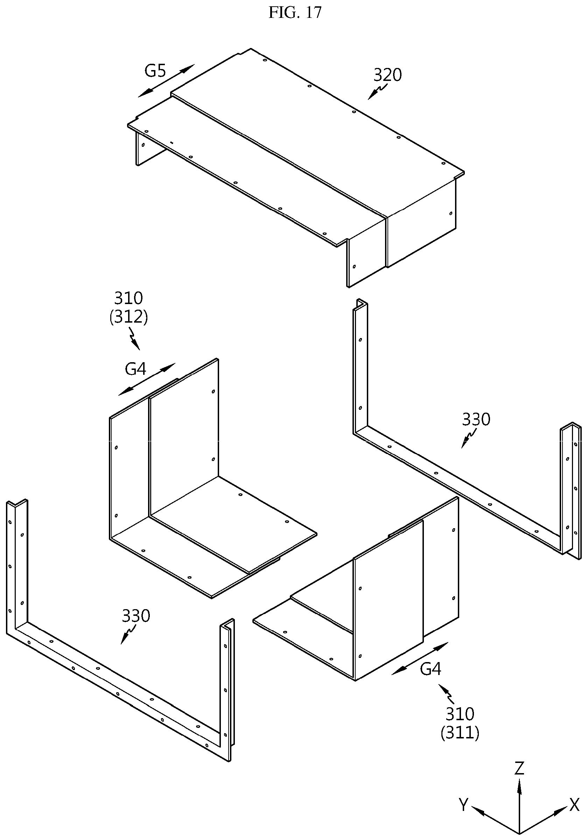

FIG. 17 is an exploded perspective view schematically showing the configuration of a protective cover included in a battery system according to still another example useful for understanding of the present disclosure.

Referring to FIG. 17, the protective cover 300 may be configured to vary in length in the direction where the battery containers 100 are stacked, that is, in the left-right direction (X-axis direction). More specifically, the bottom cover 310, that is, the first bottom cover 311 and the second bottom cover 312, may be configured to change in length (width) in the left-right direction in the direction of arrow G4. In this case, each of the first bottom cover 311 and the second bottom cover 312 may be configured to be slidable in the left-right direction while different plate-shaped members are stacked facing each other. In addition, the top cover 320 may be configured to vary in width in the direction of arrow G5 in FIG. 17. In this case, the top cover 320 may change in width by moving in the direction of G5 in a sliding manner while two plate-shaped members are stacked facing each other.

According to this example useful for understanding of the present disclosure, the protective cover 300 may change its shape appropriately in response to the distance between different battery containers 100, that is, the tolerance in the X-axis direction in which the battery containers 100 are disposed. Therefore, in this case, even when the fixed position of the battery container 100 is changed, the protective cover 300 may be stably mounted on the battery container 100 by changing the length (width) of the protective cover 300.

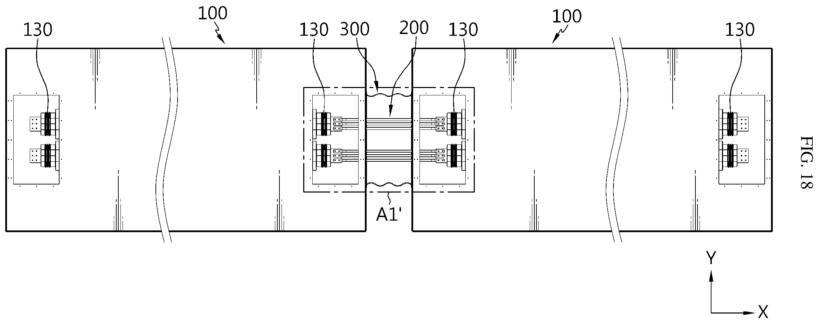

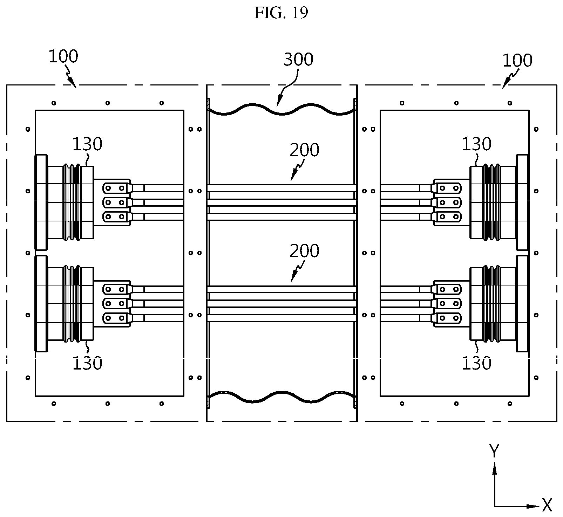

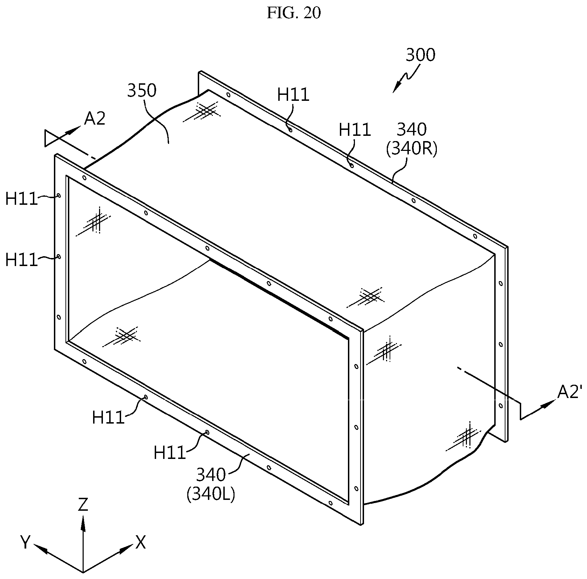

FIG. 18 is a top view schematically showing the configuration of a battery system according to an embodiment of the present disclosure. FIG. 19 is a partially enlarged view schematically showing a partial configuration of a battery system according to an embodiment of the present disclosure. In particular, FIG. 19 may be referred to as an enlarged view of a partial configuration with respect to portion A1' of FIG. 18. Also, in FIG. 18, it is illustrated in a partially removed, cut, or transparent form for convenience of description. In addition, FIG. 20 is a perspective view schematically showing the configuration of a protective cover according to an embodiment of the present disclosure.

Referring to FIGS. 18 to 20, the protective cover 300 may be configured to be mounted on the container housing 120 of the battery container 100 to protect the link bus bar 200. In particular, the protective cover 300 includes a mounting member 340 and a cover member 350.

The mounting member 340 may be mounted on the outer side of the two battery containers 100 electrically connected by the link bus bar 200. In particular, two mounting members 340 may be provided in one protective cover 300, and the two mounting members 340 may be fixed to different battery containers 100. For example, as shown in FIG. 18, the protective cover 300 may be installed in a space between two battery containers 100 disposed adjacent to each other in the left-right direction. In this case, one mounting member 340 provided in the protective cover 300, that is, the left mounting member 340L, may be attached and fixed to the left container, and the other mounting member 340, that is, the right mounting member 340R, may be attached and fixed to the right container.

The mounting member 340 may be fastened and fixed to the container housing 120 of the battery container 100 by bolting. In this case, the mounting member 340 may have a mounting hole formed therein, as indicated by H11 in FIG. 20. Also, the bolt may be inserted and fixed to the container housing 120 through the mounting hole H11 of the mounting member 340. However, the present disclosure is not necessarily limited to such a fastening method between the mounting member 340 and the container housing 120. That is, the mounting member 340 may be mounted and fixed to the container housing 120 in various other ways. Also, the mounting member 340 may be made of a material with high mechanical strength, such as metal, in order to stably support the cover member 350 while ensuring fastening strength with the container housing 120. In addition, the mounting member 340 may be made of a plastic material having higher strength than the cover member 350.

The cover member 350 may be coupled and fixed to the two mounting members 340 between the two mounting members 340. For example, the cover member 350 may have a left end coupled and fixed to the left mounting member 340L and a right end coupled and fixed to the right mounting member 340R. In this case, the cover member 350 may be fixed to the mounting member 340 by various methods such as a bolting fastening, a hook, or an adhesive method.

The cover member 350 may be configured to surround the link bus bar 200 in a flexible state. That is, the cover member 350 may have a flexible material, shape, or the like, and may be positioned outside the link bus bar 200. In particular, the cover member 350 may protect the link bus bar 200 by forming an empty space therein and then accommodating the link bus bar 200 in the inner space. Moreover, between the two mounting members 340 disposed to be spaced apart in the left-right direction, the cover member 350 may be configured to cover the top, bottom, front, and rear of the link bus bar 200.

According to this embodiment of the present disclosure, the configuration of electrical connection between the battery containers 100 may be protected more stably. In addition, according to the above embodiment, the ability to respond to tolerances with respect to the size of a space between the two battery containers 100 may be secured excellently. That is, the protective cover 300 may be installed between the two battery containers 100, wherein the space between the two battery containers 100 may have various sizes. Moreover, even if the seating position of each battery container 100 is determined in the process of constructing the battery system, the position of the battery container 100 may be changed depending on the situation during the installation process. At this time, the space between the battery containers 100 may vary in size. According to the above embodiment, since the cover member 350 has flexibility, the protective cover 300 may be deformed into an appropriate shape and mounted on the battery container 100, thereby performing stably the function of protecting the link bus bar 200.

The protective cover 300 may be configured to be detachable from the outer surface of the container housing 120. For example, with respect to two adjacent battery containers 100, two mounting members 340 may be configured to be mounted on and separated from side surfaces of each container housing 120 facing each other. In this case, the mounting member 340 may be mounted on and separated from the container housing 120 by inserting or removing a bolt into the mounting hole H11 while mounted on the container housing 120. Also, due to the mounting and separation of the mounting member 340, the protective cover 300 may be configured to surround the outer side of the link bus bar 200.

As a more specific example, for two battery containers 100 disposed in the left-right direction, that is, for a left container and a right container, the link bus bar 200 may be coupled to the right container terminal 130 of the left container. Also, in a state where the cover member 350 surrounds the link bus bar 200, the left mounting member 340L may be bolted around the right container terminal 130 of the left container. In addition, after the link bus bar 200 is coupled to the left container terminal 130 of the right container, the right mounting member 340R may be bolted around the left container terminal 130 of the right container.

According to this embodiment, the battery system may be constructed more easily.

The mounting member 340 may be formed in a ring shape, as shown in FIG. 20. In particular, the mounting member 340 may be formed in a square ring shape. Also, the cover member 350 may be formed in a hollow tube shape. Moreover, the cover member 350 may be formed in a square tube shape. In addition, the cover member 350 and the two mounting members 340 may be coupled so that the hollow of the cover member 350 communicates with the hollow of the two mounting members 340. Also, during the process of installing the protective cover 300, at least a portion of the link bus bar 200 may pass through the hollow of the cover member 350 and the mounting member 340.

According to this embodiment of the present disclosure, a configuration in which the protective cover 300 is positioned outside the link bus bar 200 to protect the link bus bar 200 may be easily achieved. In addition, according to the above embodiment, it may be more convenient to mount the protective cover 300 on the container housing 120. In particular, the installation of the protective cover 300 may be easily completed by fixing the mounting member 340 to the container housing 120 in a state where the link bus bar 200 penetrates the hollow of the mounting member 340 and the cover member 350.

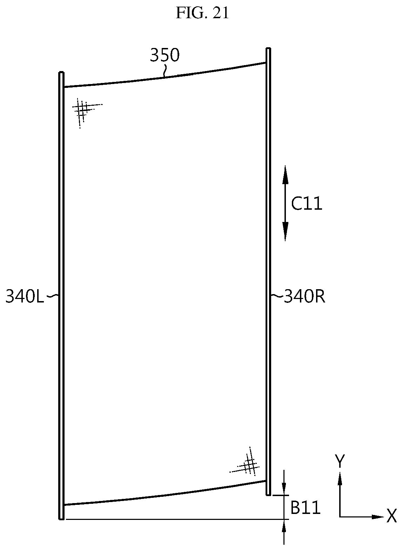

The cover member 350 may be configured to be flexible in the horizontal and vertical directions. This will be described in more detail with reference to FIGS. 21 to 23.

FIGS. 21 to 23 are views showing various shape changes of a protective cover according to an embodiment of the present disclosure. Referring to FIGS. 21 to 23, the cover member 350 may be configured to change its shape when the relative positions of the two mounting members 340 change.

First, referring to the embodiment of FIG. 21, the cover member 350 may change in shape due to its flexibility even if the positions of the two mounting members 340 in the horizontal direction are different from each other in the Y-axis direction. More specifically, it may be said that the right mounting member 340R is positioned further ahead by B11 in the +Y-axis direction compared to the left mounting member 340L. In this case, the cover member 350 may change in shape due to its flexibility even if there is a difference in the positions of both ends in the Y-axis direction. Also, there may be no significant encumbrance to the coupling of the cover member 350 to the mounting member 340 or to the function of protecting the link bus bar 200 present in the inner space. Moreover, even if the position of the right mounting member 340R changes as shown by arrow C11, the protective cover 300 may change in shape by adaptively responding to this position change.

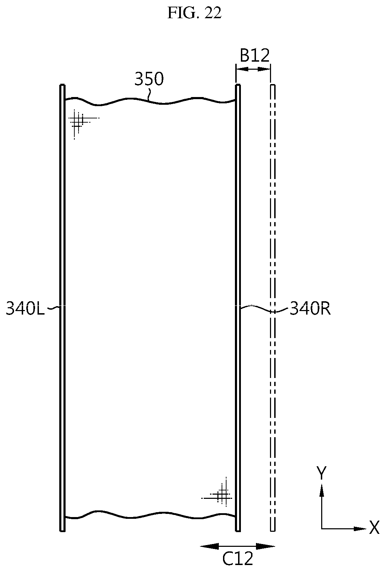

Next, referring to the embodiment of FIG. 22, the cover member 350 may change in shape due to its flexibility even if the positions of the two mounting members 340 in the horizontal direction are different from each other in the X-axis direction. That is, even if the right mounting member 340R moves in the X-axis direction as shown by arrow C12, resulting in an error such as B12 compared to the design dimension, the cover member 350 may change in shape accordingly due to its flexibility.

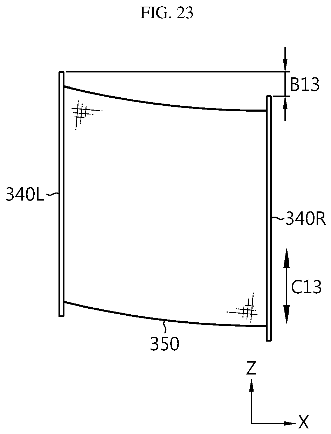

In addition, referring to the embodiment of FIG. 23, the cover member 350 may change in shape appropriately accordingly even if the positions of the two mounting members 340 in the vertical direction are different from each other in the Z-axis direction. That is, even if the right mounting member 340R moves in the Z-axis direction as shown by arrow C13, resulting in an error such as B13 compared to the design dimension, the cover member 350 may be stably coupled to the mounting member 340 through a shape change to protect the link bus bar 200.

According to the above embodiment, the flexibility of the cover member 350 may allow the cover member 350 to be stably mounted on the battery container 100 under various conditions, particularly even if there is some difference in the horizontal or vertical position of the two battery containers 100 in which the protective cover 300 is installed.

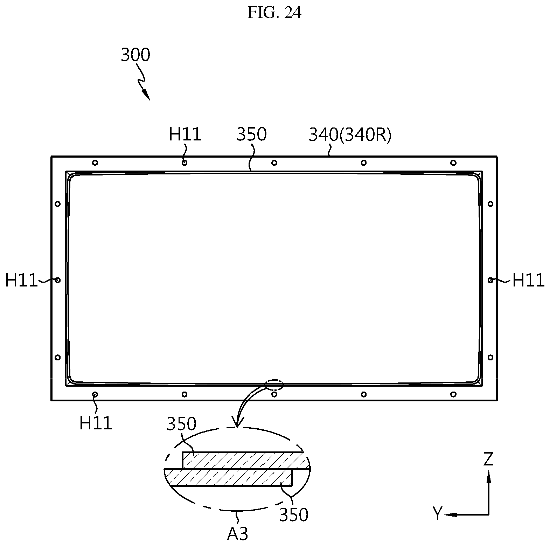

The cover member 350 may be configured in the form of a sheet in which both ends are fixed by bending. This will be described in more detail with reference to FIG. 24.

FIG. 24 is a cross-sectional view schematically showing the configuration of a protective cover according to an embodiment of the present disclosure. In particular, FIG. 24 may be referred to as a cross-sectional view taken along line A2-A2' of FIG. 20.

Referring to FIG. 24, the cover member 350 may be configured to form a hollow by bending and rolling one sheet. Also, both ends of the bent sheet may meet each other and then be coupled to each other. That is, a pipe shape may be formed by bending a flexible sheet member to couple both ends originally separated from each other. In this case, both ends coupled by bending may be formed to overlap each other, as indicated by A3. Also, the overlapping portions in this way may be coupled and fixed to each other in various ways. In particular, the overlapping portions of both ends of the sheet member may be adhered to each other using an adhesive. In addition, the coupled fixed portion of both ends, such as the adhesive portion, may be formed to extend long from one side to the other side along the edge direction of the end, for example, the X-axis direction.

Moreover, the coupling portion of the sheet member, particularly the overlapping portion, may be located at the bottom of the cover member 350. For example, referring to the configuration shown in FIG. 24, when a sheet member is bent to have a substantially rectangular pipe shape, it may have four edges of an upper, a lower, a left, and a right portion. In this case, the coupling portion of the sheet member may be located at the lower side edge.

According to this embodiment of the present disclosure, the protective cover 300 may be manufactured in a relatively simple manner. In addition, according to the above embodiment, the performance of preventing penetration of foreign substances may be further improved. In particular, when the cover member 350 is manufactured in the manner described above, there may be a risk that foreign substances such as water or dust penetrate into the end coupling portion of the sheet member. However, according to the above embodiment, it may be said that the possibility of such foreign substances penetration is very low. Moreover, when it rains in a situation where the battery system according to the present disclosure is placed outdoors, rainwater may be suppressed from flowing into the end coupling portion of the sheet member, for example, the overlapping portion such as A3. That is, according to the above embodiment, the waterproof or dustproof performance of the protective cover 300 may be further improved even with a simple structure.

In addition, the cover member 350 may be configured in the form of a fabric. That is, the cover member 350 may have a sheet shape woven using fibers. Also, the cover member 350 is manufactured in such a fabric form and then may be configured to have a hollow by being bent as described in FIG. 24. In addition, the cover member 350 may be configured to have waterproof performance. For example, the cover member 350 may be configured in a form in which a waterproof layer is coated on one or both surfaces of a substrate made of fabric. For example, the cover member 350 may be made of a tarpaulin material. For example, the cover member 350 may include a tarpaulin material.

According to this embodiment of the present disclosure, a protective cover 300 that is easy to manufacture and light in weight may be implemented. In addition, according to the above embodiment, a protective cover 300 that has excellent flexibility and may easily change in shape depending on the location or environment in which the protective cover 300 is mounted, may be provided more easily.

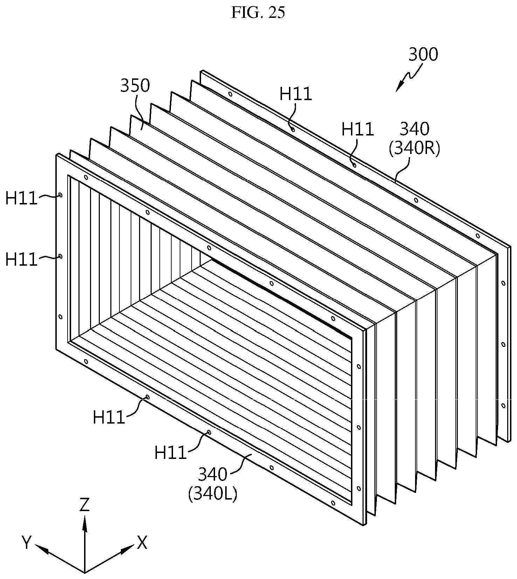

FIG. 25 is a perspective view schematically showing the configuration of a protective cover according to another embodiment of the present disclosure. For each embodiment included in this specification, including this embodiment, detailed descriptions of portions to which descriptions of other embodiments may be applied identically or similarly will be omitted, and portions with differences will be mainly described.

Referring to FIG. 25, the cover member 350 may be configured in the form of a corrugated tube. For example, the cover member 350 may be configured in a tubular shape with both ends fixed to the left mounting member 340L and the right mounting member 340R, respectively, and may be configured such that a plurality of corrugations are formed in the left-right direction (X-axis direction). Also, when the distance between the left mounting member 340L and the right mounting member 340R is decreasing or increasing, these corrugations may be folded or unfolded. Moreover, the cover member 350 may have a bellows shape. Here, the material of the cover member 350 may be selected from various plastics. In addition, in the cover member 350, an iron core or the like may be inserted into at least some of the corrugations to provide the shape of these corrugations, to maintain the shape above a certain level, or to improve strength.

According to this embodiment of the present disclosure, the accommodation space of the link bus bar 200 present inside the cover member 350 may be sufficiently secured even when there is a change in the distance or position of the two mounting members 340. In addition, according to the above embodiment, the length of the cover member 350 may be changed more effectively between the two mounting members 340 in response to a positional change in a specific direction, that is, a positional change in the X-axis direction. Therefore, the mounting state and function of the protective cover 300 may be maintained more stably even in the face of the position changes in this direction.

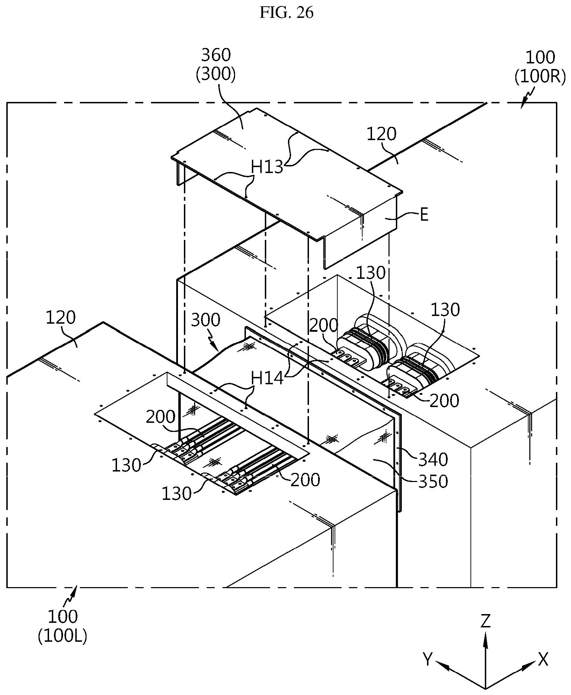

FIG. 26 is a view schematically showing a partial configuration of a battery system according to still another embodiment of the present disclosure. Moreover, in FIG. 26, some configurations are illustrated in a separated form for convenience of description.

Referring to FIG. 26, the protective cover 300 may further include a roof member 360. The roof member 360 may be formed in a plate shape and disposed on top of the cover member 350. In particular, the roof member 360 may be configured to cover an upper portion of the cover member 350. For example, the roof member 360 may be formed in a substantially square plate shape and may be configured to cover all or most of the cover member 350 when viewed from above. Moreover, the roof member 360 may be configured to have a larger size than the cover member 350 in the left-right direction (X-axis direction) and in the front-rear direction (Y-axis direction). Here, the roof member 360 may be positioned to be spaced apart from the cover member 350 in an upward direction, but may also be positioned so that at least a portion thereof is in contact with the cover member 350.

According to this embodiment of the present disclosure, the performance of preventing penetration of foreign substances by the protective cover 300 may be further improved. In particular, in case of rain, raindrops may approach from the upper side of the protective cover 300, and the roof member 360 may primarily block the raindrops, thereby reducing the raindrops directed toward the cover member 350 and/or the mounting member 340. In addition, according to the above embodiment, durability of the cover member 350 and/or the mounting member 340 may be further improved. In particular, in the case of the cover member 350, the durability may be somewhat weak if it is made of a highly flexible material, but according to the above embodiment, the disadvantage of durability of the cover member 350 may be supplemented by the roof member 360.

In addition, the roof member 360 may be formed to have a length in the left-right direction longer than the separation distance in the left-right direction between the two battery containers 100 disposed adjacent to each other in the left-right direction. For example, referring to the embodiment of FIG. 26, a width of the roof member 360 the left-right direction (X-axis direction) may be formed greater than the separation distance in the left-right direction between the left container 100L and the right container 100R. In addition, mounting holes may be formed at both ends of the roof member 360 in the left-right direction as indicated by H13, and mounting holes may be formed at the two container housings 120 as indicated by H14, respectively corresponding thereto. Also, the roof member 360 may be fastened and fixed to the container housing 120 by passing bolts through the mounting holes H13 of the roof member 360 and the mounting holes H14 of each container housing 120.

According to this embodiment of the present disclosure, the waterproof or dustproof performance of the roof member 360 may be further improved. In particular, according to the above embodiment, it is possible to more effectively suppress water or foreign substances from penetrating into the fastening portion between the mounting member 340 and the container housing 120.

In addition, the roof member 360 may have a bent portion as indicated by E in FIG. 26. The bent portion E may have a substantially vertically bent shape in a downward direction to cover the cover member 350 at an end of the roof member 360. For example, the roof member 360, in a substantially plate-shaped state, may have a portion in which a front side (-Y-axis direction side) end and a rear side (+Y-axis direction side) end are bent in a downward direction.

According to this embodiment of the present disclosure, the protection performance of the roof member 360 for the cover member 350 may be further improved.

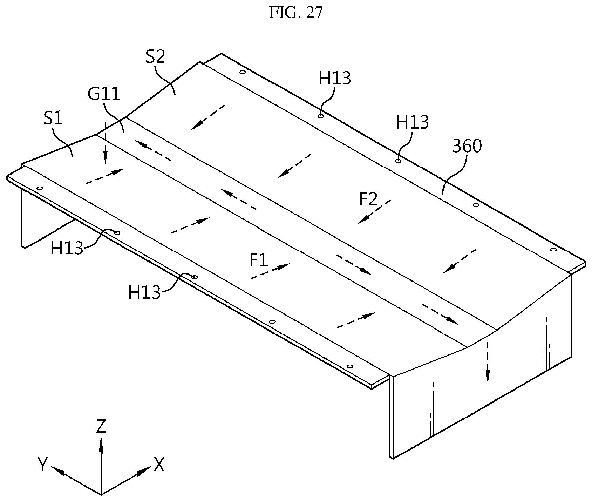

FIG. 27 is a view schematically showing a partial configuration of a battery system according to still another embodiment of the present disclosure. In particular, FIG. 27 may be referred to as another modification of the roof member 360 fastened and fixed to the upper space between the two container housings 120 as shown in FIG. 26.

Referring to FIG. 27, the roof member 360 may have an inclined surface. More specifically, the roof member 360 may have inclined surfaces formed on an outer surface, such as an upper surface, as indicated by S1 and S2. These inclined surfaces S1, S2 may be configured to be inclined at a predetermined angle from the horizontal surface (X-Y plane).

According to this embodiment of the present disclosure, it is possible to prevent foreign substances such as rain, snow, and dust from easily remaining on the roof member 360. Therefore, a large load may be prevented from being applied to the roof member 360, thereby preventing the roof member 360 from being deformed or damaged. In addition, by quickly discharging these foreign substances in an outward direction, it is possible to further suppress foreign substances from moving from the top of the roof member 360 toward the cover member 350 or the mounting member 340.

In addition, the roof member 360 may have a concave portion on the outer surface, as indicated by G11 in FIG. 27. For example, the concave portion G11 may be formed in a concave shape in a downward direction on an upper surface of the roof member 360. The concave portion G11 may be implemented through a bending or bending configuration of the roof member 360. Alternatively, the concave portion G11 may be configured in a shape dug by a predetermined depth on the surface of the roof member 360. Here, the inclined surfaces S1, S2 of the roof member 360 may be configured to be inclined to be gradually lowered toward the concave portion G11.

According to this embodiment of the present disclosure, the path for the external discharge of foreign substances placed on the upper surface of the roof member 360 may be limited by the concave portion G11. Therefore, it is possible to suppress foreign substances more effectively from being directed toward a specific portion of the battery system. In addition, in this case, foreign substances in contact with the outer surface of the roof member 360 may be discharged to the outside more easily.

For example, in the embodiment of FIG. 27, when it rains on the upper surface of the roof member 360, rainwater may fall on the left inclined surface S1 and the right inclined surface S2 of the roof member 360. At this time, the rainwater may flow in the directions of arrows F1, F2 and flow into the concave portion G11. Also, the rainwater flowing into the concave portion G11 may flow toward the front side or the rear side along the concave portion, as indicated by the dotted arrow, and then may be discharged to the outside of the roof member 360. That is, it may be said that a discharge path for rainwater or other foreign substances falling on the upper surface of the roof member 360 is defined by the concave portion G11.

In particular, the concave portion G11 of the roof member 360 may be located in the central portion. In addition, the roof member 360 may have inclined surfaces S1, S2 located on both sides centered on this concave portion G11. In this case, foreign substances such as rain or snow falling on the upper surface of the roof member 360 may be directed toward the central portion of the roof member 360 in the left-right direction. And, as a result, the performance of preventing penetration of foreign substances by the roof member 360 may be further improved.

Moreover, mounting holes H13 for coupling the roof member 360 to the container housing 120 may be present on the left and right ends of the roof member 360. In addition, the container terminal 130 may be positioned close to the left and right ends of the roof member 360, as shown in FIG. 26.

Therefore, according to the above embodiment, when foreign substances such as rain or snow fall on the upper portion of the roof member 360, it is possible to prevent the foreign substances from penetrating into the mounting hole H13, the container terminal 130, or the mounting member 340.

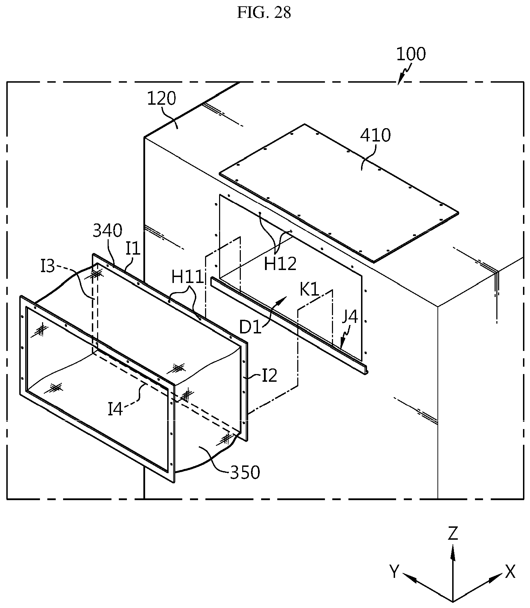

FIG. 28 is an exploded perspective view schematically showing a partial configuration of a battery system according to still another embodiment of the present disclosure.

Referring to FIG. 28, the mounting member 340 may be configured such that at least a portion thereof is inserted into the outer side of the container housing 120. More specifically, an insertion groove as indicated by J4 may be formed at the outer side of the container housing 120. Moreover, the insertion groove J4 may have the form of a protrusion that protrudes from the outer surface of the container housing 120 in a lateral direction and then bends and extends upwardly. Also, when the mounting member 340 is mounted on the container housing 120, at least a portion of the mounting member 340 may be inserted into the insertion groove J4 of the container housing 120.

In particular, when the mounting member 340 is formed in a square ring shape, four frames (edges) may be present in the mounting member 340, as indicated by I1 to I4. In this case, one of the frames, frame I4, may be mounted in the insertion groove J4 of the container housing 120, as indicated by K1 in the drawing. Then, the other remaining frames, that is, frames I1 to I3, have mounting holes H11 formed therein, and may be coupled to the mounting holes H12 formed in the container housing 120 by bolting or the like. In particular, the insertion groove J4 of the container housing 120 may be positioned at the lower portion of the terminal accommodating portion D1. Also, the lower portion of the mounting member 340, that is, the lower frame I4 of the mounting member 340 may be inserted into the insertion groove J4 of the container housing 120.

According to this embodiment of the present disclosure, the coupling force between the protective cover 300 and the container housing 120 may be further improved. In addition, according to the above embodiment, the assembly process of mounting the protective cover 300 to the container housing 120 may be more convenient. In particular, in the process of mounting the mounting member 340 to the container housing 120, the lower portion of the mounting member 340 may not be easily bolted and fastened due to the cover member 350 or the like. However, as in the embodiment of FIG. 28, according to the configuration in which the lower portion of the mounting member 340 is inserted into the container housing 120 and the side and upper portions of the mounting member 340 are fastened by bolts, the mounting process of the mounting member 340 may become easier.

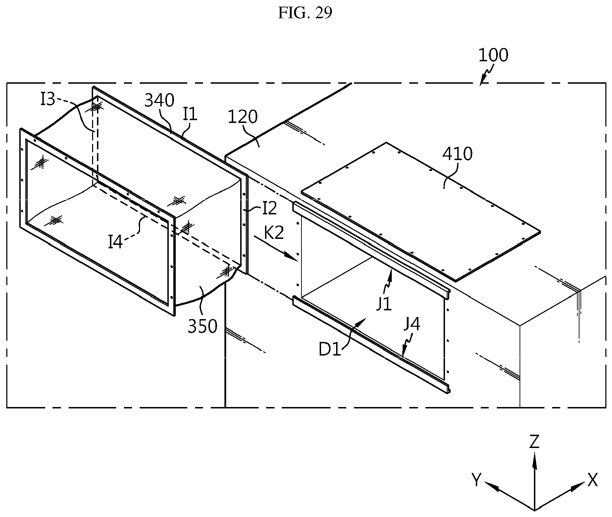

FIG. 29 is an exploded perspective view schematically showing a partial configuration of a battery system according to still another embodiment of the present disclosure.

Referring to FIG. 29, an insertion groove as indicated by J1 may be formed at the outer side of the container housing 120. This insertion groove J1 may be located on the upper side with respect to the side opening of the terminal accommodating portion D1. The upper side insertion groove J1 may also be configured in a form protruding from the outer surface of the container housing 120 to the outside. In particular, the upper side insertion groove J1 may have a shape that protrudes from the outer surface of the container housing 120 in a lateral direction and then bends and extends downwardly. In addition, the mounting member 340 may be configured such that the upper side thereof, for example, the upper frame I1 in the form of a square frame is inserted into the upper side insertion groove J1.

According to this embodiment of the present disclosure, the waterproof performance or dustproof performance of the protective cover 300 may be further improved. In particular, in a situation where it is raining or snowing, there may be a relatively high risk of water inflow through a gap between the container housing 120 and the upper frame I1 among various portions of the mounting member 340. However, according to the above embodiment, since the upper frame I1 of the mounting member 340 is configured to be inserted into the container housing 120, the inflow of water or other foreign substances into the upper frame I1 may be prevented more reliably. That is, according to the above embodiment, the sealing force between the container housing 120 and the protective cover 300 may be further improved. In particular, as in the above embodiment, when the upper side insertion groove J1 is configured in a form protruding outwardly, this inflow prevention effect may be further increased.

Moreover, as shown in FIG. 29, the insertion configuration of the mounting member 340 may be provided on both the upper frame I1 and the lower frame I4 sides. In this case, the protective cover 300 may be inserted into the upper insertion groove J1 and the lower insertion groove J4 in a sliding manner, as indicated by arrow K2 in FIG. 29. In addition, the bolting fastening configuration may be applied to the front and rear frames I3, I2 to which the insertion configuration of the mounting member 340 is not applied. At this time, in a state where the sliding type fastening is completed, the link bus bar 200 may be inserted through the protective cover 300 and into the terminal accommodating portion D1 side. According to this embodiment, the assembly and coupling properties, and the sealing force of the protective cover 300 may be further improved.

The protective cover 300 according to the present disclosure may further improve the sealing property of a contact portion with the container housing 120 by using silicon molding or the like. For example, the mounting member 340 formed in a square ring shape may have a sealing portion formed of a material such as silicon along the four frames (edges).

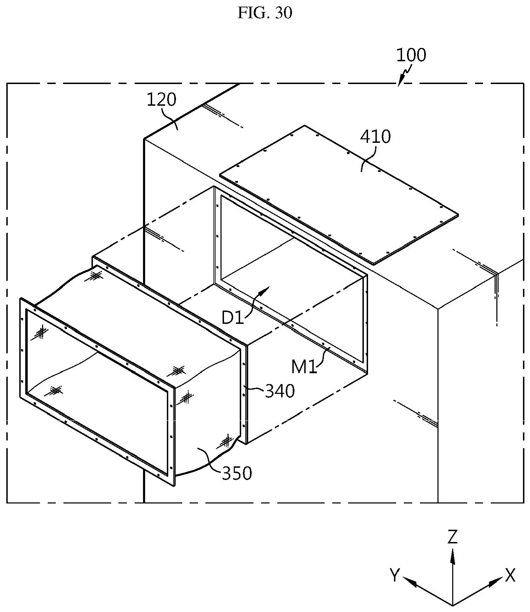

FIG. 30 is an exploded perspective view schematically showing a partial configuration of a battery system according to still another embodiment of the present disclosure.

Referring to FIG. 30, a mounting groove for mounting the mounting member 340 may be formed on the outer side of the container housing 120, as indicated by M1. The mounting groove M1 may be configured to be dug by a predetermined distance from the outer surface of the container housing 120 in an inward direction. The mounting groove M1 may be formed in a shape and position corresponding to the shape and mounting position of the mounting member 340. For example, as shown in FIG. 30, when the mounting member 340 is formed in a square ring shape, the mounting groove M1 may also be formed in a square ring shape.

According to this embodiment of the present disclosure, coupling between the container housing 120 and the mounting member 340 may be further improved. Also, according to the above embodiment, the mounting groove M1 serves as a guide for the coupling position of the mounting member 340, and thus the assembly of the protective cover 300 may be further improved. In addition, according to the above embodiment, the mounting member 340 may be inserted into the mounting groove M1, thereby more effectively preventing water or other foreign substances from penetrating into the coupling portion between the mounting member 340 and the container housing 120.

In addition, the mounting member 340 and/or the container housing 120 may have magnets at portions where they are coupled to each other. For example, the mounting member 340 may include permanent magnets, and the container housing 120 may be made of a material to which the permanent magnets adhere, for example, a ferromagnetic material such as iron.

According to this embodiment of the present disclosure, the coupling force and assemblability of the mounting member 340 may be further improved. In particular, even if the mounting member 340 is fastened to the container housing 120 by bolting, the bolting fastening operation may be performed more easily when the position of the mounting member 340 is stably fixed by a magnet.

Meanwhile, with respect to the various embodiments described in the embodiments of FIGS. 18 to 30, the description of the various embodiments described earlier, such as the embodiments of FIGS. 12 to 17, may be applied identically or similarly.

For example, for the embodiment of FIG. 12, the mounting member 340 may be mounted on the side opening of the terminal accommodating portion D1. In particular, the mounting member 340 formed in a ring shape may be mounted on the container housing 120 in the form of surrounding the side opening of the terminal accommodating portion D1.

As another example, in the embodiment of FIG. 15, the upper edge of the mounting member 340 formed in a square ring shape may be fastened to the side of the coupling reinforcing member F by bolting. In addition, an end of the roof member 360 described in the embodiments of FIGS. 26 and 27 may be coupled and fixed to the upper surface of the coupling reinforcing member F. Moreover, the coupling reinforcing member F may have a mounting hole formed therein, as indicated by H14 in FIG. 26, for coupling and fixing with other components. A detailed description of this additional embodiment will be omitted.

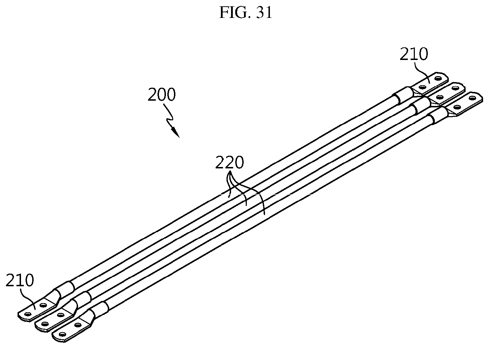

FIG. 31 is a view schematically showing the configuration of a link bus bar 200 according to an embodiment of the present disclosure.

Referring to FIG. 31, the link bus bar 200 according to the present disclosure may include a connecting portion 210 and a cable 220. Here, the connecting portion 210 may be provided in plurality in a number corresponding to the number of battery systems connected by the link bus bar 200. For example, when the link bus bar 200 electrically connects two battery systems, the connecting portion 210 may be provided in two groups as shown in FIG. 31. Alternatively, when the link bus bar 200 connects three battery systems, the connecting portion 210 may be provided in three groups. Of course, the number of connecting portions 210 may be greater than the number of battery systems being connected. The connecting portion 210 may be a portion of the link bus bar 200 that is coupled in direct contact with the container terminal 130. Therefore, the connecting portion 210 may have a fastening structure corresponding to the container terminal 130 to be coupled and fixed to the container terminal 130. For example, the connecting portion 210 may be configured to form a fixing hole and be fastened to the container terminal 130 by bolting.

The cable 220 may be configured to connect between the plurality of connecting portions 210. For example, as shown in FIG. 31, in the case of a link bus bar 200 having connecting portions 210 on both sides, the cable 220 may be connected between the connecting portions 210 on both sides. That is, the cable 220 may be respectively connected between the connecting portions 210 having different ends. The cable 220 may be configured in a form in which the surface of a metallic wire such as copper is covered with a non-conductive material such as a polymer. **In** particular, in the link bus bar 200 of the battery system according to the present disclosure, the cable 220 may be provided in plurality. For example, the link bus bar 200 may be configured in a form in which three or six cables 220 are provided between two connecting portions 210. In this case, the plurality of cables 220 may be configured to be detachable without being fixed to each other. For example, both ends of the three cables 220 are connected to the connecting portions 210, but the remaining portions except both ends, particularly the central portion, may be configured in a form separated from each other.

According to this embodiment of the present disclosure, it is possible to more effectively cope with errors occurring when constructing a battery system. In particular, when two battery systems are disposed adjacent to each other, even if tolerances occur in the vertical direction, in the left-right direction, or in the front-rear direction, it is possible to adaptively respond to such tolerances according to the above-described configuration of the link bus bar 200. Moreover, in the case of the above embodiment, it may be said that the ability to respond to tolerances is superior to that of flexible flat cables having flexibility only in a specific direction.

The battery system according to the present disclosure may further include a control module. The control module may be included inside or outside the container housing 120, and may be configured to control the overall operation or status of the battery container.

The energy storage system according to the present disclosure includes the battery system according to the present disclosure described above. In particular, in the case of the battery system according to the present disclosure, the description has been centered on two battery containers 100, but three or more such battery containers 100 may be included. Therefore, the energy storage system according to the present disclosure may include a battery system having two or more battery containers 100. Also, the energy storage system according to the present disclosure may further include a control container for controlling various operations such as charge/discharge operation of the battery system in addition to the battery system. In addition, the energy storage system according to the present disclosure may further include a fire-fighting device for responding to a fire in the battery system. For example, the fire-fighting device may be a water injection unit configured to supply water to the inside of the battery container 100 in the event of a fire in a specific battery container 100.

Meanwhile, the terms indicating directions as used herein such as upper, lower, left, right, front, and rear are used for convenience of description only, and it is obvious to those skilled in the art that the term may change depending on the position of the stated element or an observer. In addition, the terms inner and outer are used herein, and unless otherwise specified, for each component, the inner direction means a direction toward the center and the outer direction means the opposite direction.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure.

### [Reference Signs]

100: battery container
110: battery module, 120: container housing, 130: container terminal
200: link bus bar
210: connecting portion, 220: cable
300: protective cover
310: bottom cover
311: first bottom cover, 312: second bottom cover
320: top cover
330: guide cover
331: horizontal guide portion, 332: vertical guide portion
340: mounting member
350: cover member
360: roof member
410: upper terminal cover
420: side terminal cover

## Claims

1. A battery system comprising:
a plurality of battery containers (100) having one or more battery modules (110), a container housing (120) accommodating the battery modules in an inner space, and a container terminal (130) located on at least one side of the container housing and configured to be electrically connected to the outside;
a link bus bar (200) having different ends respectively connected to container terminals of different battery containers and electrically connecting a plurality of battery containers; and
a protective cover (300) coupled to a container housing of a plurality of battery containers electrically connected by the link bus bar and configured to surround the link bus bar in a space between the plurality of battery containers,
wherein the protective cover comprises two mounting members (340) respectively mounted on the outer side of the two battery containers connected by the link bus bar, and a cover member (350) coupled to the two mounting members and configured to surround the link bus bar in a flexible state,
**characterized in that** the cover member is configured in the form of a fabric.

2. The battery system according to claim 1,
wherein the protective cover is configured to be detachable from the outer surface of the container housing.

3. The battery system according to claim 1,
wherein the protective cover comprises a plurality of unit covers configured to be separated from and coupled to each other.

4. The battery system according to claim 1,
wherein the mounting member is formed in a ring shape, and the cover member is formed in a tubular shape.

5. The battery system according to claim 1,
wherein the cover member is configured to be flexible in the horizontal and vertical directions.

6. The battery system according to claim 1,
wherein the cover member is configured in the form of a sheet in which both ends are fixed by bending.

7. The battery system according to claim 1,
wherein the cover member is configured in the form of a corrugated tube.

8. The battery system according to claim 1,
wherein the protective cover further comprises a roof member (360) disposed on top of the cover member.

9. The battery system according to claim 1,
wherein the mounting member is configured such that at least a portion thereof is inserted into the outer side of the container housing.

10. An energy storage system comprising a battery system according to any one of claims 1 to 9.

## Patentansprüche

1. Batteriesystem, umfassend:
eine Vielzahl von Batteriebehältern (100) mit einem oder mehreren Batteriemodulen (110), einem Behältergehäuse (120), das die Batteriemodule in einem Innenraum aufnimmt, und einem Behälteranschluss (130), der sich auf mindestens einer Seite des Behältergehäuses befindet und so konfiguriert ist, dass er elektrisch mit der Außenseite verbunden werden kann;
eine Verbindungssammelschiene (200), deren verschiedene Enden jeweils mit Behälteranschlüssen verschiedener Batteriebehälter verbunden sind und die eine Vielzahl von Batteriebehältern elektrisch verbindet; und
eine Schutzabdeckung (300), die mit einem Behältergehäuse einer Vielzahl von Batteriebehältern gekoppelt ist, die durch die Verbindungssammelschiene elektrisch verbunden sind, und die so konfiguriert ist, dass sie die Verbindungssammelschiene in einem Raum zwischen der Vielzahl von Batteriebehältern umgibt,
wobei die Schutzabdeckung zwei Befestigungselemente (340), die jeweils an der Außenseite der beiden durch die Verbindungssammelschiene verbundenen Batteriebehälter montiert sind, und ein Abdeckelement (350) umfasst, das mit den beiden Befestigungselementen gekoppelt und so konfiguriert ist, dass es die Verbindungssammelschiene in einem flexiblen Zustand umgibt,
**dadurch gekennzeichnet, dass** das Abdeckelement in Form eines Gewebes konfiguriert ist.

2. Batteriesystem nach Anspruch 1, wobei die Schutzabdeckung so konfiguriert ist, dass sie von der Außenfläche des Behältergehäuses abnehmbar ist.

3. Batteriesystem nach Anspruch 1, wobei die Schutzabdeckung eine Vielzahl von Einheitsabdeckungen umfasst, die so konfiguriert sind, dass sie voneinander getrennt und miteinander gekoppelt werden können.

4. Batteriesystem nach Anspruch 1, wobei das Befestigungselement in Ringform ausgebildet ist und das Abdeckelement in einer röhrenförmigen Form ausgebildet ist.

5. Batteriesystem nach Anspruch 1, wobei das Abdeckelement so konfiguriert ist, dass es in horizontaler und vertikaler Richtung flexibel ist.

6. Batteriesystem nach Anspruch 1, wobei das Abdeckelement in Form einer Folie konfiguriert ist, bei der beide Enden durch Biegen befestigt sind.

7. Batteriesystem nach Anspruch 1, wobei das Abdeckelement in Form eines Wellrohrs konfiguriert ist.

8. Batteriesystem nach Anspruch 1, wobei die Schutzabdeckung ferner ein Dachelement (360) umfasst, das oben auf dem Abdeckelement angeordnet ist.

9. Batteriesystem nach Anspruch 1, wobei das Befestigungselement so konfiguriert ist, dass mindestens ein Teil davon in die Außenseite des Behältergehäuses eingeführt ist.

10. Energiespeichersystem, umfassend ein Batteriesystem nach einem der Ansprüche 1 bis 9.

## Revendications

1. Système de batterie comprenant :
une pluralité de conteneurs de batterie (100) ayant un ou plusieurs modules de batterie (110), un boîtier de conteneur (120) logeant les modules de batterie dans un espace intérieur, et une borne de conteneur (130) située sur au moins un côté du boîtier de conteneur et configurée pour être connectée électriquement à l'extérieur ;
une barre omnibus de liaison (200) ayant des extrémités différentes respectivement connectées à des bornes de conteneur de différents conteneurs de batterie et connectant électriquement une pluralité de conteneurs de batterie ; et
un couvercle de protection (300) couplé à un boîtier de conteneur d'une pluralité de conteneurs de batterie connectés électriquement par la barre omnibus de liaison et
configuré pour entourer la barre omnibus de liaison dans un espace entre la pluralité de conteneurs de batterie,
dans lequel le couvercle de protection comprend deux éléments de montage (340) montés respectivement sur le côté extérieur des deux conteneurs de batterie connectés par la barre omnibus de liaison, et un élément de couvercle (350) couplé aux deux éléments de montage et configuré pour entourer la barre omnibus de liaison dans un état flexible,
**caractérisé en ce que** l'élément de couvercle est configuré sous la forme d'un tissu.

2. Le système de batterie selon la revendication 1, dans lequel le couvercle de protection est configuré pour être détachable de la surface extérieure du boîtier de conteneur.

3. Le système de batterie selon la revendication 1, dans lequel le couvercle de protection comprend une pluralité de couvercles unitaires configurés pour être séparés et couplés les uns aux autres.

4. Le système de batterie selon la revendication 1, dans lequel l'élément de montage est formé en forme d'anneau, et l'élément de couvercle est formé en une forme tubulaire.

5. Le système de batterie selon la revendication 1, dans lequel l'élément de couvercle est configuré pour être flexible dans les directions horizontale et verticale.

6. Le système de batterie selon la revendication 1, dans lequel l'élément de couvercle est configuré sous la forme d'une feuille dont les deux extrémités sont fixées par pliage.

7. Le système de batterie selon la revendication 1, dans lequel l'élément de couvercle est configuré sous la forme d'un tube ondulé.

8. Le système de batterie selon la revendication 1, dans lequel le couvercle de protection comprend en outre un élément de toit (360) disposé sur le dessus de l'élément de couvercle.

9. Le système de batterie selon la revendication 1, dans lequel l'élément de montage est configuré de telle sorte qu'au moins une partie de celui-ci est insérée dans le côté extérieur du boîtier de conteneur.

10. Système de stockage d'énergie comprenant un système de batterie selon l'une quelconque des revendications 1 à 9.
